(19) Europäisches Patentamt
European Patent Office
Office européen des brevets

(11) **EP 2 887 043 A1**

(12) **EUROPEAN PATENT APPLICATION**

(43) Date of publication:
**24.06.2015 Bulletin 2015/26**

(21) Application number: **13275326.0**

(22) Date of filing: **19.12.2013**

(51) Int Cl.:
*G01M 5/00* (2006.01)  *G01M 11/08* (2006.01)
*G02B 6/36* (2006.01)  *B64D 45/00* (2006.01)
*F03D 7/00* (2006.01)  *B29C 65/82* (2006.01)
*B29C 65/48* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Assessing integrity of bonded joints**

(57) There is provided apparatus and a method for assessing the integrity of a bonded joint in an assembly. The assembly has a bonded joint (5) monitored for bond integrity and comprises first (1) and second (2) components each defining a bonding surface (3, 4); the joint (5) is formed between the bonding surfaces (3, 4) and the first component (1) defines a passage (15) therethrough from the bonding surface to an exterior of the component. The joint (5) includes an optical fibre (11) extending along the joint (5) between the bonding surfaces (3, 4), through the passage (15) and emerging from the passage (15) to the exterior of the component. The method of constructing the assembly includes the steps of passing the optical fibre (11) through the passage (15) and adhering the optical fibre to the bonding surface (1) of the first component (1), thus bringing the two bonding surfaces (3, 4) together and forming the bond (5).

Fig. 1

EP 2 887 043 A1

**Description**

This invention relates to assessment of the integrity of bonded joints in components and in particular to assessment of the bond integrity of fibre reinforced composite structures.

The integrity of high strength bonded structures is often critical, for example in aircraft, and any failure of such a structure, like a carbon fibre wing, for example, could be critical to the safety of the aircraft. The problem of assessing bond integrity may be equally important for structures which are not necessarily safety critical but which are either extremely expensive, such as large wind turbines, or which are expected to perform for long periods reliably and which may be difficult to access, such as building structures.

Such bonded structures may be of fibre-reinforced composite material or may be metallic structures, such as bonded aluminium vehicle bodies.

It is known to place fibres within fibre-reinforced composite components whose failure, due to impact damage for example, may send an electrical signal to a processor to alert an operator. To date, however, no such solution is known for assessing the integrity of bonds between parts of a structure. It is envisaged that a particular difficulty with such a system would be getting damage information from the bond as the bond is, by definition, located between parts of a unified structure. In addition, any edges of such a bonded joint will often be inaccessible owing to the way in which the component is structured. In assemblies containing bonded joints, those joints may butt up against one another making the edge of the joint inaccessible. Where the bond edge is accessible, an optical fibre cannot emerge through it without protection as it will be liable to break. Protection schemes, such as tubing, are likely to adversely affect the strength of the bond, making such an approach inappropriate.

Bonded structures likely to cause particular difficulty with both inspection and access, for optical fibre damage detection, are airframe structures, in particular wings and fuselages, where a clean aerodynamic surface is required on one side of the structure and where they may be no accessible edge to the structure from which to access the ends of optical fibres embedded in the structure.

According to a first aspect of the present invention there is provided an assembly having a bonded joint monitored for bond integrity, the assembly comprising first and second components each defining a bonding surface thereon, the joint being formed between the bonding surfaces, the first component defining a passage therethrough from the bonding surface to an exterior of the component, the joint including an optical fibre extending along the joint between the bonding surfaces, through the passage and emerging from the passage to the exterior of the component.

The passage may be directed and dimensioned whereby to allow the optical fibre to pass therethrough while defining a bend radius which allows light to pass along the optical fibre. To this end, the passage may be angled with respect to the joint.

The assembly preferably includes a support for the emerging optical fibre and the support may include an end connector for the optical fibre attached to the support.

The support may further include a casing for the emerging optical fibre such as a flexible hollow tube.

The casing may penetrate the passage, whereby to give support to the optical fibre from within the first component.

The optical fibre is likely to be vulnerable to damage, as it changes direction when turning through the passage from the joint. The optical fibre may therefore be potted within the passage, for example in an epoxy resin, to give the fibre further support in this vulnerable length of fibre.

The optical fibre may have light input at one end thereof and a light sensing arrangement at or near the other end thereof. For such an arrangement, the optical fibre may form a loop within the joint.

For reasons of structural integrity of the assembly, a number of optical fibres may pass through a single passage rather than a number of passages.

The assembly of the invention may be of particular benefit in high strength fibre-reinforced composite structures where the integrity of bonds between composite components or parts of a composite structure is critical. Examples of such structures are building or vehicle structures, in particular aircraft components such as aerofoils, fuselages and components thereof. Thus, at least one of the first and second components may comprise a fibre-reinforced composite structure and may comprise an aircraft structural airframe component.

According to a second aspect of the present invention there is provided a method of constructing an assembly having a bonded joint monitored for bond integrity, the assembly comprising first and second components each defining a bonding surface thereon, the joint being formed between the bonding surfaces, the first component defining a passage therethrough from the bonding surface to an exterior of the component, the joint including an optical fibre extending along the joint between the bonding surfaces, through the passage and emerging from the passage to the exterior of the component, the method including the steps of passing the optical fibre through the passage and adhering the optical fibre to the bonding surface of the first component, bringing the two bonding surfaces together and forming the bond.

The step of adhering the optical fibre to the bonding surface of the first component may comprise applying adhesive to adhere the optical fibre to the bonding surface at selected locations on the bonding surface and securing the optical fibre in position while the adhesive sets.

The step of securing the optical fibre in position may comprise applying adhesive tape to the bonding surface of the first component whereby to secure the optical fibre in position while the adhesive sets. The adhesive tape may be applied to the bonding surface of the first component over the adhesive.

In order to protect the vulnerable optical fibre passing through the passage in the first component, while securing the optical fibre in position, adhesive tape may be applied to the bonding surface over an entrance to the passage.

The invention will now be further described by way of example, with reference to the accompanying drawings in which:-

Figure 1 is a schematic vertical section through an assembly according to the invention;

Figure 2 is a perspective view of the assembly of Figure 1 having adhesive injected into a passage;

Figure 3 is a perspective view of part of the assembly of Figure 2, inverted;

Figure 4 is a perspective view of the bonding face of a first component of the assembly of Figure 2;

Figure 5 is a perspective end view of the assembly of Figure 2, connected to a light source, and

Figure 6 is a diagram of an assembly according to the invention, showing various angles and dimensions.

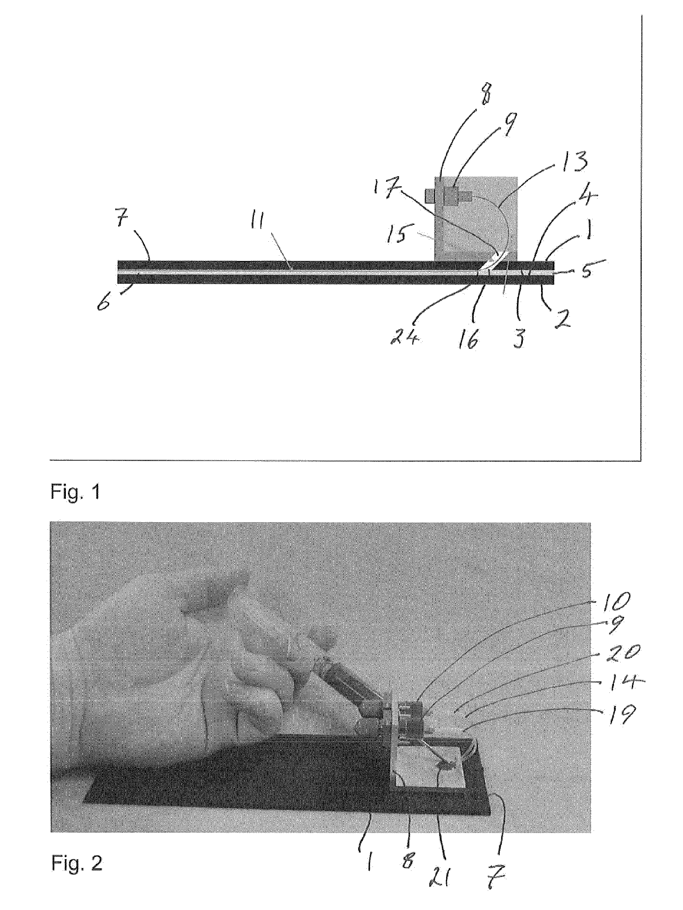

In Figure 1 an assembly according to the invention comprises first and second fibre-reinforced composite components 1, 2 each having a bonding surface 3, 4 facing the other. A bonded joint 5, is formed between the bonding surfaces 3, 4. Bonding together the bonding surfaces of the first and second components 1, 2 is a layer 6 of epoxy resin adhesive.

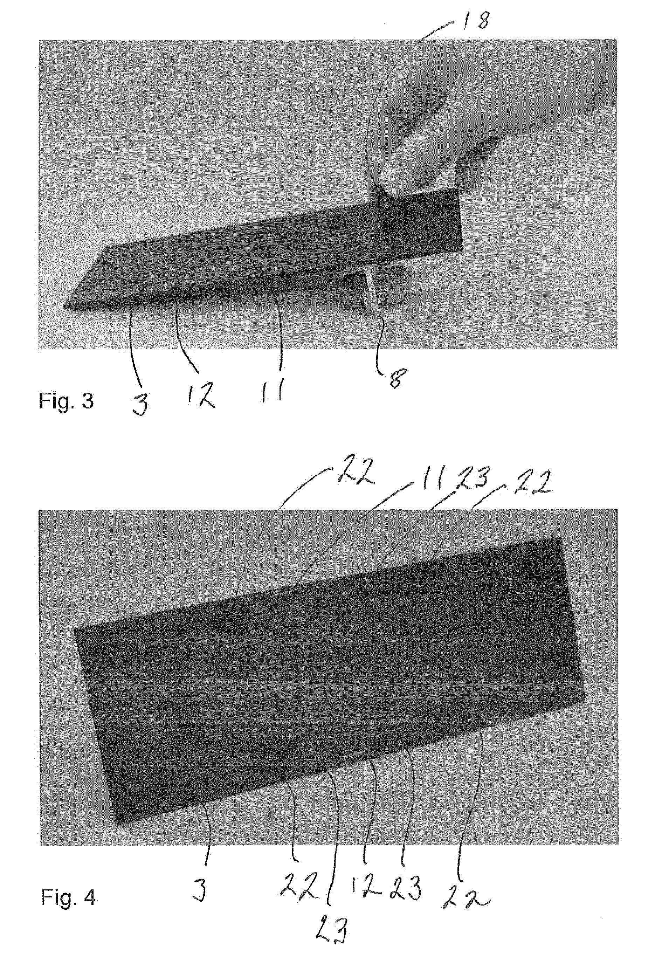

Attached to an exterior surface 7 of the first component 1 is a metal bracket 8. The bracket 8 supports a pair of a fibre end connectors 9, 10 (only one of which appears in Figure 1) each of which is connected to an end of an optical fibre 11. The optical fibre 11 extends in a loop 12 (see also Figures 3 and 4) within the joint 5 and has radiused terminal portions 13, 14 extending from the joint 5 to the end connectors 9, 10.

Each radiused terminal portion 13, 14 passes through a circular drilled passage 15. The passage 15 has a component portion 16, drilled through the first component 1, and a bracket portion 17 drilled through the bracket 8. Both portions 16 and 17 are drilled at an angle of 45 deg. to the bonding surface 3. It will be observed that the passage is of considerably larger diameter than the optical fibre 11, thereby allowing the fibre to curve within the passage. It would clearly be possible to form the passage 15 with curvature to match the diameter and intended curvature of the optical fibre 11. This could be achieved by laser drilling, for example, or an alternative forming process. However, for simplicity and to save cost, it is simpler simply to drill conventionally a hole for the passage which is of larger diameter.

The point of entry 24 of the optical fibre 11 into the joint 5 is vulnerable, owing to the transition from it being relatively straight within the joint 5 to the much tighter curvature of the terminal portions 13, 14. Great care when feeding the fibre 11 through the passage 15 is therefore required. The terminal portions 13, 14 emerging from the passage 15 are also vulnerable and some form of protection is likely to be required. The long term functionality of optical fibre can be compromised if subjected to excessively tight bends. Thus, a suitable bend radius must be calculated.

In this example, a 4.5 mm passage 15 is drilled in the first component 1 at approximately 45° and burrs are removed from the edges of the passage. A length of single mode fibre 11 is then fed through the passage and held in place using adhesive tape 18. The tape 18 is to ensure that the fibre 11 emerges from the passage at a shallow angle which will minimise local stresses on the fibre and reduce the risk of it breaking.

Short lengths 19, 20 of PTFE tubing are then fitted over the fibre 11 on the other side of the first component 1 with their ends being placed into the passage 15. This tubing should not enter the joint 5.

Referring to Figure 2, it can be seen that the passage 15 is then filled with epoxy adhesive 21, fixing the fibre 11 and the sleeves 19, 20 in place. Once the adhesive 21 has cured, the tape 18 is removed (it should be peeled away in the direction the fibre 11 emerges from the passage 15). This ensures that the fibre is not subjected to sharp bending at the point that it emerges from the substructure hole. Araldite 2014 adhesive was chosen to encapsulate the fibre because of its low shrinkage.

The fibre 11 is then tacked to the bonding surface 3 of the first component 1. There are two reasons to tack the fibre; firstly, for protection and, secondly, to accurately position the fibre. Figure 4 shows how this would work. The fibre 11 is laid out and held into place using short lengths of tape 22. Then small quantities of epoxy adhesive 23 are applied to several points on the fibre 11 to tack it to the surface 1.

Finally, the two components 1, 2 are bonded together using epoxy adhesive 6. During the bonding step, weights or vacuum can be applied to compress the joint.

**EP 2 887 043 A1**

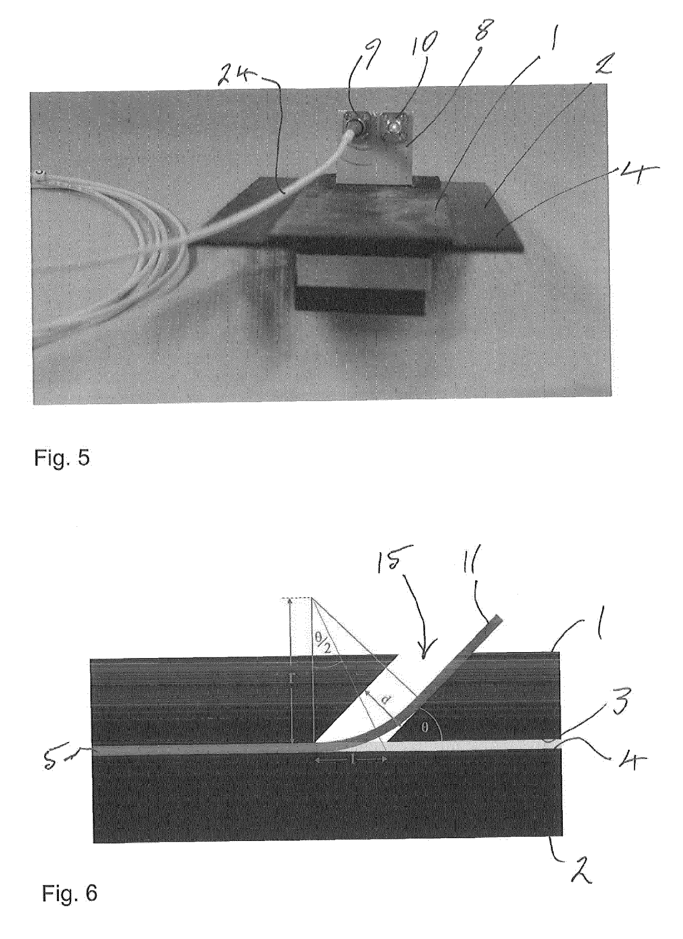

Referring to Figures 1 and 5, the point at which the fibre 11 enters the joint 5 can be subject to tight bending and lateral forces during the bonding process. The integrity of the optical fibre 11 can be determined using a continuity test. Light is passed down the fibre 11 from a cable 24 attached to one 9 of the end connectors and, if light appears at the end connector 10 at the other end of the fibre 11, as shown in figure 5, the integrity of the joint 5 and of the optical fibre 11 is confirmed. The excess loss associated with incorporating the fibre into the bond line is likely to be of the order of 1.5 dB for the fibre loop.

Optical fibre cannot be subjected to sharp bends for two reasons. Firstly, in time, the optical fibre is likely to break at a sharp bend and, secondly, a sharp bend will cause a significant optical loss. Thus, for best operation of optical fibre, it is best to limit the sharpness of bends. This section quantifies how the features of the passage 15 determine the bend radius of the optical fibre 11.

Using the equation:

$$l = \frac{d}{\sin(\theta)} \tag{1}$$

Where d is the diameter of the passage/hole, $\theta$ is the angle of the hole from horizontal and l is the longest axis of the hole at its end.

From the geometry we find:

$$\tan\left(\frac{\theta}{2}\right) = \frac{l}{r} \tag{2}$$

Thus,

$$r = \frac{d}{1-\cos(\theta)} \tag{3}$$

So, for a minimum bend radius of 15 mm and an angle of 45° then a hole radius of 4.4 mm is required.

**Claims**

1.   An assembly having a bonded joint monitored for bond integrity, the assembly comprising first and second components each defining a bonding surface thereon, the joint being formed between the bonding surfaces, the first component defining a passage therethrough from the bonding surface to an exterior of the component, the joint including an optical fibre extending along the joint between the bonding surfaces, through the passage and emerging from the passage to the exterior of the component.

2.   An assembly according to claim 1, in which the passage is directed and dimensioned whereby to allow the optical fibre to pass therethrough while defining a bend radius which allows light to pass along the optical fibre.

3.   An assembly according to claim 2, in which the passage is angled with respect to the joint.

4.   An assembly according to claim 1, 2 or 3, including a support for the emerging optical fibre.

5.   An assembly according to claim 4, in which the support includes an end connector for the optical fibre attached to the support.

**6.** An assembly according to claim 4 or 5, including a casing for the emerging optical fibre.

**7.** An assembly according to claim 6, in which the casing penetrates the passage.

**8.** An assembly according to any of claims 4 to 7, in which the optical fibre is potted within the passage.

**9.** An assembly according to any preceding claim, in which the optical fibre forms a loop within the joint.

**10.** An assembly according to any preceding claim, including a number of optical fibres passing through a single passage.

**11.** An assembly according to any preceding claim, in which at least one of the first and second components comprises a fibre-reinforced composite structure.

**12.** An assembly according to claim 11, comprising an aircraft structural airframe component.

**13.** A method of constructing an assembly having a bonded joint monitored for bond integrity, the assembly comprising first and second components each defining a bonding surface thereon, the joint being formed between the bonding surfaces, the first component defining a passage therethrough from the bonding surface to an exterior of the component, the joint including an optical fibre extending along the joint between the bonding surfaces, through the passage and emerging from the passage to the exterior of the component, the method including the steps of passing the optical fibre through the passage and adhering the optical fibre to the bonding surface of the first component, bringing the two bonding surfaces together and forming the bond.

**14.** A method according to claim 13, in which the step of adhering the optical fibre to the bonding surface of the first component comprises applying adhesive to adhere the optical fibre to the bonding surface at selected locations on the bonding surface and securing the optical fibre in position while the adhesive sets.

**15.** A method according to claim 14, in which the step of securing the optical fibre in position comprises applying adhesive tape to the bonding surface of the first component whereby to secure the optical fibre in position while the adhesive sets.

Fig. 1

Fig. 2

Fig. 3    3   12   11   8   18

Fig. 4    3   22   23   22   12   23   22   11   23

Fig. 5

Fig. 6

**Europäisches Patentamt**
**European Patent Office**
**Office européen des brevets**

# EUROPEAN SEARCH REPORT

Application Number

EP 13 27 5326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANG H K ET AL: "Development of fibre optic ingress/egress methods for smart composite structures", SMART MATERIALS AND STRUCTURES, IOP PUBLISHING LTD., BRISTOL, GB, vol. 9, no. 2, 1 April 2000 (2000-04-01), pages 149-156, XP020071340, ISSN: 0964-1726, DOI: 10.1088/0964-1726/9/2/304 * paragraph [0003]; figures 4-9 * | 1-15 | INV. G01M5/00 G01M11/08 G02B6/36 ADD. B64D45/00 F03D7/00 B29C65/82 B29C65/48 |
| X | US 5 604 836 A (DUNPHY JAMES R [US] ET AL) 18 February 1997 (1997-02-18) * column 3, line 9 - column 8, line 21; figures 1-5 * | 1-15 | |
| X | WO 00/26710 A1 (US NAVY [US]) 11 May 2000 (2000-05-11) * abstract; figure 1 * * pages 6-8 * | 1-15 | |

| | TECHNICAL FIELDS SEARCHED (IPC) |
|---|---|
| | B29C G01M |

The present search report has been drawn up for all claims

| Place of search | Date of completion of the search | Examiner |
|---|---|---|
| Munich | 7 May 2014 | Taillandier, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 27 5326

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2014

| Patent document cited in search report | | Publication date | Patent family member(s) | | Publication date |
|---|---|---|---|---|---|
| US 5604836 | A | 18-02-1997 | CN | 1202970 A | 23-12-1998 |
| | | | DE | 69603507 D1 | 02-09-1999 |
| | | | DE | 69603507 T2 | 18-11-1999 |
| | | | EP | 0866991 A1 | 30-09-1998 |
| | | | GR | 3031366 T3 | 31-01-2000 |
| | | | JP | 3982833 B2 | 26-09-2007 |
| | | | JP | 2000501854 A | 15-02-2000 |
| | | | KR | 100402674 B1 | 18-12-2003 |
| | | | US | 5604836 A | 18-02-1997 |
| | | | WO | 9722029 A1 | 19-06-1997 |
| WO 0026710 | A1 | 11-05-2000 | US | 6173090 B1 | 09-01-2001 |
| | | | WO | 0026710 A1 | 11-05-2000 |

EPO FORM P0459

For more details about this annex : see Official Journal of the European Patent Office, No. 12/82